# EUROPÄISCHE PATENTSCHRIFT

(11) **EP 1 902 873 B1**
(45) Veröffentlichungstag und Bekanntmachung des Hinweises auf die Patenterteilung: **17.11.2010**
(21) Anmeldenummer: 07016795.2
(22) Anmeldetag: 28.08.2007
(51) Int. Cl.: B60G 7/02, B62D 21/11

(54) **Fahrschemel mit Einzelradauhängung und Zahnstangenlenkung an der Vorderachse**
Suspension sub-frame with independent wheel suspension and rack-and-pinion steering gear for a front axle
Faux-châssis avec suspension de roue indépendante et direction à crémaillère pour essieu avant

(30) Priorität: 20.09.2006 DE 102006044107
(43) Veröffentlichungstag der Anmeldung: 26.03.2008
(73) Patentinhaber: MAN Nutzfahrzeuge AG, 80995 München (DE)
(72) Erfinder: Hufschmid, Robert, 80637 München (DE); Harmeier, Reinhard, 82194 Gröbenzell (DE); Regner, Alois, 85540 Haar (DE); Schaller, Karl-Viktor, 80638 München (DE)

(56) Entgegenhaltungen:
- EP-A- 1 270 283
- DE-A1-102004 038 487
- DE-U1- 20 022 516
- US-B1- 6 176 501

## Beschreibung

### Technisches Gebiet:

Die vorliegende Erfindung bezieht sich auf einen Fahrschemel und insbesondere einen Fahrschemel für schwere Nutzfahrzeuge. Es wird jedoch darauf hingewiesen, dass die vorliegende Erfindung auch bei anderen Nutzfahrzeugen Anwendung finden kann.

Aus der DE 10 2004 038 487 A1 ist beispielsweise ein Fahrgestell für ein Nutzfahrzeug bekannt. Das Fahrgestell umfasst einen Fahrzeugrahmen, der wenigstens zwei voneinander beabstandete und über mehrere Querträger miteinander verbundene Rahmenlängsträger aufweist, und mit einem an vorderen Enden der Rahmenlängsträger befestigbaren Frontmodul, das wenigstens zwei voneinander beabstandete Längsträger aufweist, die wenigstens eine Querverbindung aufweisen und an denen eine Vorderachsaufhängung des Nutzfahrzeuges angeordnet ist. Dabei ist das Frontmodul mit einer darin befestigten Antriebsmaschine und einem damit verbundenen Getriebe und/oder weiteren Peripheriekomponenten vormontiert. Der darin verwendete Fahrschemel, der die im Oberbegriff des Anspruchs 1 definierten Merkmale aufweist, erfüllt die vorgesehene technische Funktion. Im Hinblick auf die Herstellungskosten und Fertigungstoleranzen sowie die Kraftflusseigenschaften ist der bekannte Fahrschemel aber noch verbesserungsfähig.

Die Vorderachse schwerer Nutzfahrzeuge besteht in der Regel aus einer Starrachse, die durch Blattfedern oder bei Luftfederung mit Hilfe von Längslenkern und gegebenenfalls auch unter Verwendung eines so genannten Panhardstabs geführt wird. Dabei werden die Federung und die Lenker an den Rahmen beziehungsweise den Rahmenlängsträger über entsprechende Aufnahme- beziehungsweise Lagerböcke angebunden. Jedoch weist eine Einzelradaufhängung an der Vorderradachse diverse Vorteile gegenüber einer Starrachsenanordnung auf, z.B. beeinflussen sich beispielsweise die Räder beim Ein- oder Ausfedern nicht.

Gleichwohl wird jedoch das Prinzip der Einzelradaufhängung das oben erwähnte Starrachsenkonzept nicht generell ersetzen. Daher wäre es wünschenswert, beide Konzepte, das heißt, das Starrachsenkonzept sowie das Prinzip der Einzelradaufhängung nebeneinander zu führen, ohne dass dafür umfangreiche konstruktive Umbaumaßnahmen insbesondere am Rahmensystem des Fahrzeugs nötig sind. Will man daher die Vorteile einer Einzelradaufhängung an der Vorderachse nutzen, stellt sich damit auch die Frage, ob hier speziell für diese Fahrzeuge neue Rahmen, speziell Rahmenvorderteile, entwickelt werden sollen, oder von einem vorhandenen Rahmenkonzept ausgegangen werden soll.

Der vorliegenden Erfindung liegt daher die Aufgabe zugrunde, eine Einzelradaufhängung zur Verfügung zu stellen, die mit bestehenden Rahmenausbildungen kombiniert werden kann, sodass nach Wunsch an einer bestimmten Rahmenkonstruktion sowohl eine Einzelradaufhängung, als auch eine Starrachsenanordnung angebracht werden kann. Eine weitere Aufgabe wird darin gesehen, einen Fahrschemel mit Einzelradaufhängungen für Nutzfahrzeuge zur Verfügung zu stellen, mittels dem eine besonders stabile Anbindung der Rahmenlängsträger an dem Fahrschemel erzielt wird, die hohen Belastungen, wie sie insbesondere im Nutzfahrzeugbereich auftreten können, standhält und den Abbau von Kraftspitzen ermöglicht.

Dies wird erfindungsgemäß durch einen Fahrschemel nach Anspruch 1 sowie eine Baugruppe nach Anspruch 6 erreicht. Vorteilhafte Ausführungsformen sind Gegenstand der Unteransprüche.

Der erfindungsgemäße Fahrschemel mit Einzelradaufhängung, insbesondere für Nutzfahrzeuge, weist ein erstes seitliches Halteelement auf, sowie ein zweites seitliches Halteelement, das beabstandet zu dem ersten seitlichen Haltelement angeordnet ist. Daneben sind wenigstens zwei Querträger vorgesehen, welche die beiden seitlichen Halteelemente miteinander verbinden. An jedem Halteelement ist je eine Aufnahmeanordnung zur Aufnahme einer Federungseinrichtung und/oder einer Dämpfungseinrichtung vorgesehen sowie sind weiter Aufnahmeelemente zur Aufnahme von Querlenkern vorgesehen. Weiterhin ist an jedem seitlichen Halteelement eine Aufnahmeeinrichtung zur Aufnahme eines Rahmenlängsträgers vorgesehen, die jeweils eine mit den Rahmenlängsträgern verbindbare Befestigungsschiene aufweisen. Erfingdungsgemäß sind die Befestigungsschienen mittels Stützen gegenüber den Querträgern abgestützt. Auf diese Weise kann die Stabilität zwischen den Rahmenlängsträgern und den Querträgern erhöht werden.

Weiter sind damit die einzelnen Aufnahmeanordnungen nicht direkt an dem Rahmenelement angeordnet, sondern an den Halteelementen. Diese Anordnung erlaubt eine Vorgruppierung der vollständigen Anordnung, dass heißt des Fahrschemels und erst nachdem dies erfolgt ist einen Zusammenbau mit dem Rahmenlängsträger. Damit ist der erfindungsgemäße Fahrschemel so gestaltet, dass er sich leicht an einen auf konventionelle Art gefertigten Zsb. (Zusammenbau-) Rahmen bestehend aus zwei Rahmenlängsträgern, die durch Querträger verbunden sind, montieren lässt.

Weiterhin ist es möglich, ohne umfangreiche Änderungen des bestehenden Rahmenkonzeptes wie beispielsweise der Fhs - Lagerung, der Motorlagerung, der Rahmenanbauteile, des Rahmenhinterteils mit Achseinbau und dergleichen, Fahrzeuge, insbesondere Sattelzugmaschinen, an der Vorderachse mit Einzelradaufhängung zu versehen. Bei der Serienproduktion ist es weiterhin möglich, ein bestimmtes Rahmenkonzept sowohl für eine Einzelradaufhängung als auch für ein Starrachsenprinzip anzuwenden.

Vorzugsweise sind die seitlichen Haltelemente als Pressteile oder als Schweißgruppierung ausgeführt.

Weiter ist in vorteilhafter Weise vorgesehen, dass der Rahmenlängsträger entlang im wesentlichen der gesamten Aufnahmeeinrichtung und des gesamten Halteelements mit dem jeweiligen Halteelement verbunden ist.

Bei einer weiteren bevorzugten Ausführungsform sind die Befestigungsschienen zwischen den seitlichen Halteelementen angeordnet. Dies bedeutet, dass die beiden Halteelemente bezüglich der Rahmenlängsträger außenliegend angeordnet sind. Durch diese Vorgehensweise werden damit die Rahmenelemente zwischen den beiden Halteelementen aufgenommen. Es wäre jedoch auch möglich, den Rahmenlängsträger jeweils außerhalb der beiden Haltelemente anzuordnen.

Bei einer weiteren bevorzugten Ausführungsform weisen die Aufnahmeanordnungen Befestigungsmittel zur Befestigung einer die beiden Halteelemente verbindenden Domstrebe auf. Diese Domstrebe ist besonders bevorzugt oberhalb der beiden Halteelemente angeordnet und so kann sich beispielsweise ein Motor zwischen der Domstrebe und den beiden Querträgern befinden.

Die vorliegende Erfindung bezieht sich weiterhin auf eine Einzelradaufhängungsbaugruppe mit einem Fahrschemel der oben beschriebenen Art. Vorzugsweise sind an den Aufnahmeelementen der Halteelemente untere Querlenker angeordnet. Damit erfolgt im Gegensatz zu den aus dem Stand der Technik bekannten Starrachsensystemen auch die Anlenkung der Querlenker an die Halteelemente und nicht an die Rahmenlängsträger.

Bei einer weiteren bevorzugten Ausführungsform ist ein Lenkgetriebe vorgesehen, das mit einer Befestigungseinrichtung an dem Fahrschemel angeordnet ist. Dabei ist es beispielsweise möglich, das Lenkgetriebe mit einem der Querträger zu verbinden. So ist auch der Einbau einer Zahnstangenlenkung leicht durchzuführen. Anstelle einer Starrachse und Kugelumlauflenkung mit den entsprechenden Anbindungen beziehungsweise Verbindungsteilen wird der Fahrschemel mit Einzelradaufhängung und Zahnstangenlenkung montiert.

Bei einer weiteren vorteilhaften Ausführungsform ist eine Domstrebe vorgesehen, welche die beiden Haltelemente miteinander verbindet. Diese Domstrebe weist dabei bevorzugt einen nach oben gekrümmten Abschnitt auf und dient zur weiteren Stabilisierung der beiden Halteelemente gegeneinander.

Bei einer weiteren bevorzugten Ausführungsform sind die Halteelemente jeweils nach vorne verlängert, um einem Motor Platz zu bieten. Bei der Montage wird die Domstrebe erst nach dem Motoreinbau montiert. Der auf diese Weise geschaffene Verbund ergibt die benötigte Steifigkeit. Zur Aufnahme der Federungseinrichtung, die beispielsweise aus einem (Luft- oder Schrauben-) Federbein und einem Stoßdämpfer beziehungsweise einem kombinierten Feder/Dämpfermodul bestehen kann, werden die beiden Halteelemente, wie oben erwähnt, mit entsprechenden Aufnahmeböcken, die zum Beispiel als Schmiedeteil ausgeführt sind, versehen.

Bei einer weiteren vorteilhaften Ausführungsform wird die Motorlagerung und besonders bevorzugt auch die vordere Fahrerhauslagerung integriert. Dabei werden, wie oben erwähnt, die beiden Halteelemente nach vorne verlängert und zusätzlich seitlich nach links beziehungsweise rechts gebogen beziehungsweise ausgestellt, um auch einem vergrößerten Kühlmodul Platz zu bieten.

Besonders vorteilhaft können auch ein Frontunterfahrschutz, ein Frontquerträger und ein Kühlmodul mit den linken und rechten Halteelementen verbunden werden.

Vorteile und Zweckmäßigkeiten sind der nachfolgenden Beschreibung in Verbindung mit der Zeichnung zu entnehmen. Darin zeigen:
- Fig. 1: einen erfindungsgemäßen Fahrschemel in einer ersten Ausführungsform;
- Fig. 2: einen erfindungsgemäßen Fahrschemel mit angebundenen Rahmenlängsträgern;
- Fig. 3: einen Fahrschemel mit einer Domstrebe und
- Fig. 4: einen Fahrschemel in der in der in Figur 2 gezeigten Ausführungsform mit einer Domstrebe.

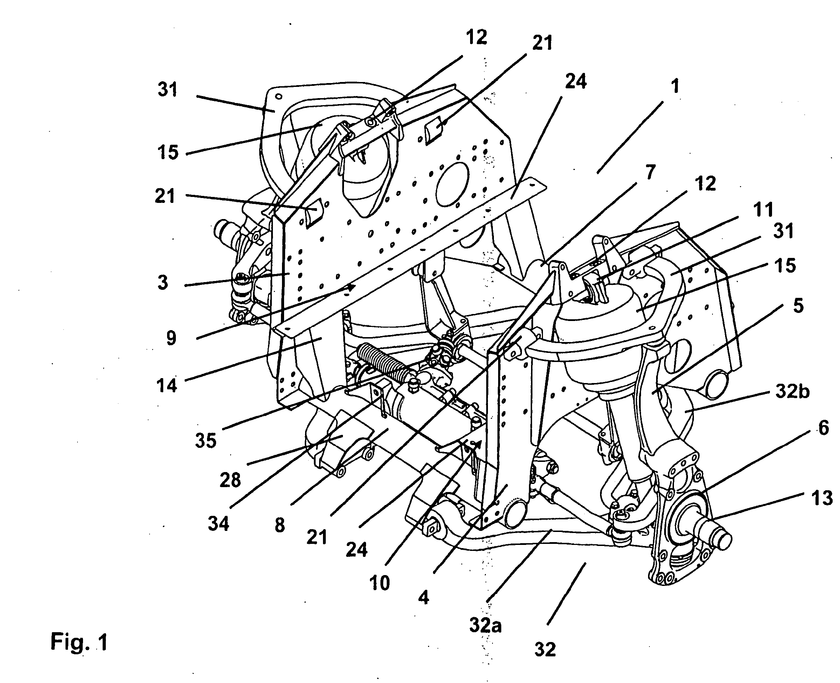

Figur 1 zeigt einen Fahrschemel 1. Dieser Fahrschemel 1 weist ein erstes seitliches Haltelement 3 und ein zweites seitliches Halteelement 4 auf. Diese beiden Halteelemente 3, 4 können als Pressteil oder als Schweißgruppierung ausgeführt sein. Die beiden seitlichen Halteelemente 3, 4 sind durch zwei Querträger 7, 8 miteinander fest verbunden. Bei diesen Querträgern handelt es sich in dieser Ausführungsform um zwei Rohre.

An ihren jeweiligen Außenseiten weisen die beiden Halteelemente 3, 4 Aufnahmeanordnungen 11 zur Aufnahme einer Federungseinrichtung 15 beziehungsweise einer Dämpfungseinrichtung 18 auf. Bei der in Figur 1 gezeigten Ausführungsform handelt es sich um kombinierte Federungs-/Dämpfungseinrichtungen. Allgemein kann es sich um ein Federbein mit einem Stoßdämpfer beziehungsweise um kombinierte Feder/Dämpfermodule handeln. Die Aufnahmeanordnung ist hier als Aufnahmebock 11, beispielsweise als Schmiedeteil, ausgeführt. Gegenüber diesem Aufnahmebock ist die Federungseinrichtung vorzugsweise schwenkbar gelagert. Daneben sind die beiden Aufnahmeanordnungen 11 auch dafür geeignet, um eine (in Figur nicht gezeigte) Domstrebe aufzunehmen, und weisen zu diesem Zweck jeweils einen Verbindungsabschnitt 12 auf.

Die Bezugszeichen 31 und 32 beziehen sich auf obere und untere Querlenker. Die oberen Querlenker 31 sind bei dieser Ausführungsform an den Haltelementen 3, 4 angeordnet und nicht, wie im Stand der Technik üblich, an einem Rahmenlängsträger. Die unteren Querlenker 32 sind mit den hinteren Schenkeln 32a an dem Querträger 8 und mit den vorderen Schenkeln 32b an den vorderen Querträger 7 angeordnet. Dabei sind Aufnahmeelemente 21 vorgesehen, die zur Aufnahme der oberen Querlenker 31 an die Halteelemente 3, 4 dienen. Die Aufnahmeelemente 21 zur Aufnahme der oberen Querlenker ragen jeweils seitlich nach außen und erlauben eine schwenkbare Anlenkung der Querlenker. Die Aufnahmeelemente können Schweißkonstruktionen sein.

Die unteren Querlenker 32 werden mittels Befestigungselementen 28 an dem Querträger 8 angeordnet. Die Montage der Räder erfolgt am Radträger 6. Der Radträger 6 verfügt hierbei im unteren Bereich über einen das Rad aufnehmenden Schenkel 13 und im oberen Bereich über eine sich im Wesentlichen bogenförmig in vertikaler Richtung erstreckende Längsstrebe 5, die am oberen Querlenker 31 befestigt wird. Anstelle der Verwendung des dargestellten Radträgers 6, der mit dem oberen und dem unteren Querlenker 31, 32 verbunden ist, ist es grundsätzlich ebenfalls denkbar, eine Radaufnahme mittels der an sich bekannten Achsschenkellagerung zu realisieren.

Die Bezugszeichen 9 und 10 beziehen sich auf eine Aufnahmeeinrichtung, die zur Aufnahme eines (nicht gezeigten) Rahmenlängsträgers dient. Dabei wird der Rahmenlängsträger direkt an den Halteelementen 3, 4 befestigt und die Halteelemente 3, 4 dienen wiederum, wie oben ausgeführt, zur Befestigung der weiteren Komponenten, wie der Querlenker. Auf diese Weise kann erreicht werden, dass auf bestehende Rahmenträgerkonzepte zurückgegriffen werden kann und auch das hier gezeigte Konzept der Einzelradaufhängung ohne hohen Aufwand durch ein Starrachsenprinzip ersetzt werden kann. Mit anderen Worten wird durch entsprechende An- beziehungsweise Umbauteile die Montage einer Einzelradaufhängung ermöglicht.

Genauer gesagt weisen die Aufnahmeeinrichtungen 9 und 10 bei der in Figur 1 gezeigten Ausführungsform Befestigungsschienen 24 auf, die sich im Wesentlichen in der vollständigen Längsrichtung der Halteelemente 3, 4 erstrecken. Auf diesen Befestigungsschienen können die Rahmenlängsträger angeordnet und mit diesen beispielsweise verschraubt werden. Die Befestigungsschienen 24 werden ihrerseits durch Stützen 14 gegenüber den Querträgern 7, 8 abgestützt.

Das Bezugszeichen 35 bezieht sich auf ein Lenkgetriebe, das ebenfalls direkt an dem Fahrschemel 1, hier genauer gesagt an dem hinteren Querträger 8 mit einer Befestigungseinrichtung 34 angeordnet ist. Damit ist auch hier im Gegensatz zum Stand der Technik das Lenkgetriebe nicht an den Rahmenlängsträgern sondern an den Fahrschemel angeordnet.

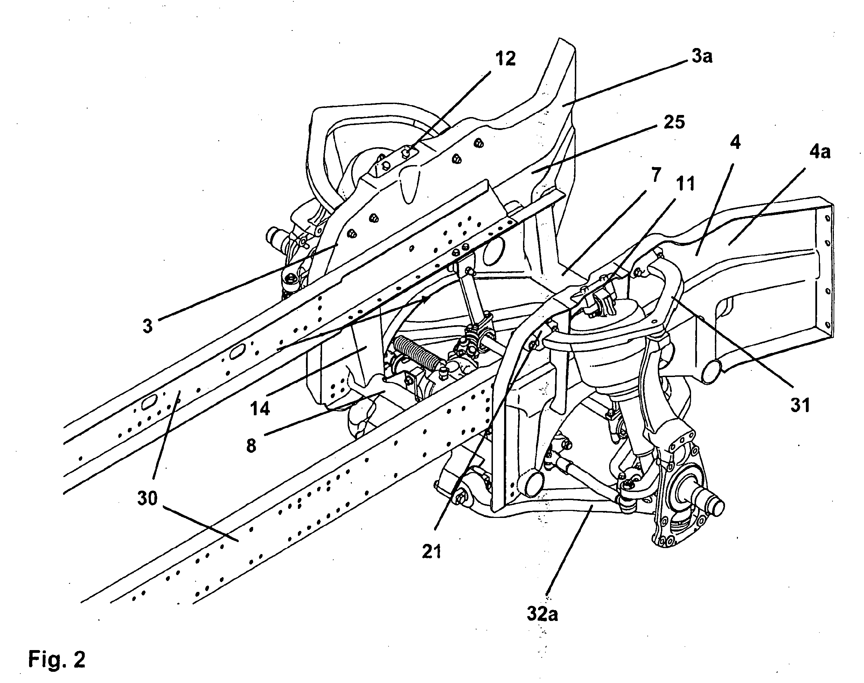

Figur 2 zeigt eine weitere Ausführungsform eines erfindungsgemäßen Fahrschemels mit daran angeordneten Rahmenlängsträgern 30. Bei dieser Ausführungsform sind in den Halteelementen 3, 4 Verstärkungsnuten 25 vorgesehen, wobei auch hier der Rahmenlängsträger mit den Halteelementen 3, 4 verschraubt werden kann. Die Stützen 14 stützen auch bei dieser Ausführungsform direkt die Rahmenlängsträger 30 gegenüber den Querträgern 7, 8 ab. Die Verstärkungsnuten 25 können jedoch auch direkt zur Aufnahme der Rahmenlängsträger 30 dienen. Man erkennt, dass sich bei dieser Ausführungsform die Halteelemente 3, 4 nach außen erweitern. Die Halteelemente sind hier als Pressteile ausgeführt. Mit anderen Worten sind die beiden Halteelemente jeweils nach vorne verlängert und seitlich nach links beziehungsweise rechts ausgestellt. Auf diese Weise kann auch einem größeren Kühlmodul Platz geboten werden. Daneben ist es bei dieser Ausführungsform, wie oben gesagt, auch möglich, einen Frontunterfahrschutz, Frontquerträger sowie das Kühlmodul mit den beiden Halteelementen 3 und 4 zu verbinden. Daneben kann bei der hier gezeigten Ausführungsform auch die Motorlagerung und die vordere Fahrerhauslagerung integriert werden.

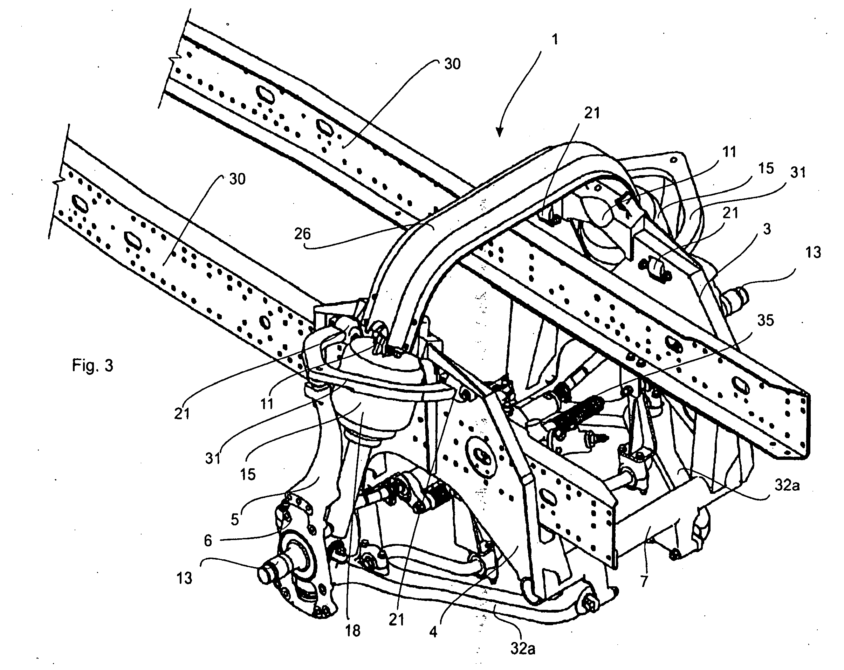

Figur 3 zeigt den Fahrschemel aus Figur 1 mit den daran angeordneten Längsträgern 30. Daneben ist hier eine Domstrebe 26 gezeigt, die ebenfalls an den Aufnahmeelementen 11 angeordnet wird. Diese Domstrebe wird erst nach dem Motoreinbau montiert. Der auf diese Weise geschaffene Verbund weist eine erhöhte Steifigkeit auf. Die Domstrebe 26 weist zwei gekrümmte Abschnitte und einen zwischen diesen gekrümmten Abschnitten liegenden geraden Abschnitt auf.

Der besondere Vorteil der erfindungsgemäßen Ausführungsform besteht darin, dass, wie oben erwähnt, der Fahrschemel 1 mit seinen Achs- und Lenkungskomponenten bereits vorgruppiert, justiert und geprüft werden kann und erst danach mit den Rahmenlängsträgern 30 verbunden wird. Eine derartige Vorgruppierung und Justierung kann mit einer entsprechenden Montagevorrichtung sehr genau und in sehr kurzer Zeit durchgeführt werden. Auch der Einbau der Zahnstangenlenkung kann vorab durchgeführt werden. Damit ist dieses Montageverfahren kostengünstig und diese Einstellarbeiten bezüglich Achskinematik und Lenkung entfallen bei der Fahrzeugendabnahme.

Man erkennt bei dieser Ausführungsform, dass auch die jeweils vorderen Schenkel 32a des unteren Querlenkers an dem Querträger 7 angeordnet sind.

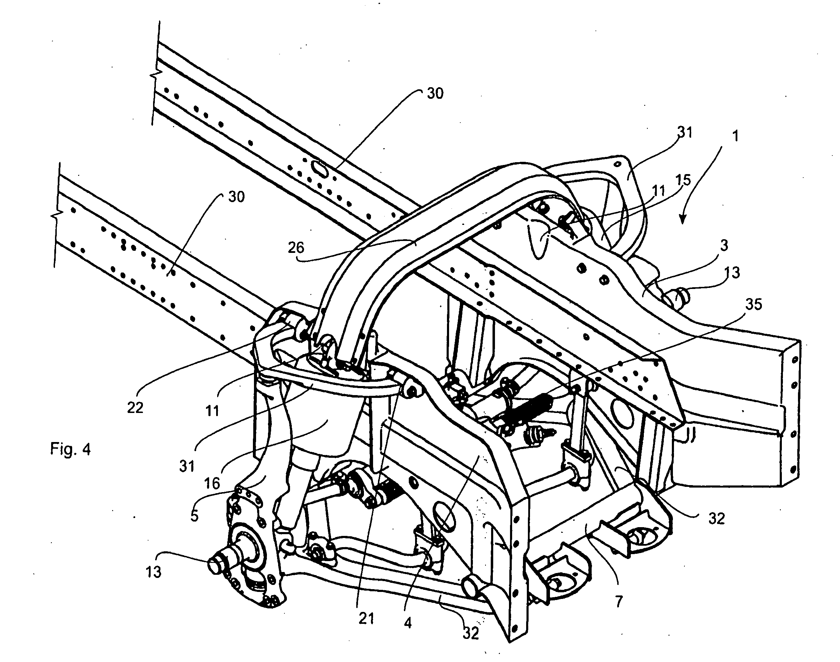

Figur 4 zeigt eine weitere Darstellung des Fahrschemels aus Figur 2 mit bereits angeordneten Rahmenlängsträgern 30. Durch die jeweils vorderen Abschnitte 3a und 4a der Halteelemente 3, 4 wird, wie oben erwähnt, auch der Einbau größerer Kühlmodule möglich.

### Bezugszeichenliste

- 1: Fahrschemel
- 3, 4: Halteelement

- 5: Längsstrebe des Radträgers

- 6: Radträger
- 7, 8: Querträger
- 9, 10: Aufnahmeeinrichtung
- 11: Aufnahmeanordnung für Federungs- Dämpfungseinrichtung

- 12: Verbindungsabschnitt
- 13: Achsschenkel

- 14: Stütze
- 15: Federungseinrichtung
- 18: Dämpfungseinrichtung

- 21: Aufnahmeelemente für obere Querlenker
- 24: Befestigungsschienen

- 25: Verstärkungsnuten
- 26: Domstrebe
- 28: Befestigungselemente
- 30: Rahmenlängsträger
- 31: obere Querlenker
- 32: untere Querlenker

- 32a: hintere Schenkel des unteren Querlenkers
- 32b: vordere Schenkel des unteren Querlenkers

- 34: Befestigungseinrichtung für Lenkgetriebe 35

- 35: Lenkgetriebe

## Patentansprüche

1. Fahrschemel (1) mit Einzelradaufhängungen für Nutzfahrzeuge mit einem ersten seitlichen Halteelement (3), einem zweiten seitlichen Haltelement (4), das beabstandet zu dem ersten seitlichen Halteelement (3) angeordnet ist, und wenigstens zwei Querträgern (7, 8), welche die beiden seitlichen Halteelemente (3, 4) verbinden, wobei an jedem Halteelement (3, 4) je eine Aufnahmeanordnung (11) zur Aufnahme einer Federungseinrichtung (15) und/oder einer Dämpfungseinrichtung (18) und Aufnahmeelemente (21) zur Aufnahme von Querlenkern (31) angeordnet sind und an jedem seitlichen Halteelement (3, 4) eine Aufnahmeeinrichtung (9, 10) zur Aufnahme eines Rahmenlängsträgers (30) vorgesehen ist, und wobei jede Aufnahmeeinrichtung (9, 10) zur Aufnahme eines Rahmenlängsträgers (30) eine mit den Rahmenlängsträgern (30) verbindbare Befestigungsschiene (24) aufweist, **dadurch gekennzeichnet, dass** die Befestigungsschienen (24) mittels Stützen (14) gegenüber den Querträgern (7, 8) abgestützt sind.

2. Fahrschemel nach Anspruch 1, **dadurch gekennzeichnet, dass** die seitlichen Halteelemente (3,4) als Pressteile oder als Schweißgruppierung ausgeführt sind.

3. Fahrschemel nach Anspruch 1 oder 2, **dadurch gekennzeichnet, dass** die Befestigungsschienen (24) zwischen den seitlichen Halteelementen (3, 4) angeordnet sind.

4. Fahrschemel nach einem der Ansprüche 1 bis 3,
**dadurch gekennzeichnet, dass** die Befestigungsschienen (24) im Wesentlichen entlang der gesamten Länge der Halteelemente (3, 4) vorgesehen sind.

5. Fahrschemel nach einem der vorangegangenen Ansprüche, **dadurch gekennzeichnet, dass** die Aufnahmeanordnungen (11) Befestigungsmittel zur Befestigung einer die beiden Halteelemente (3, 4) verbindenden Domstrebe (26) aufweisen.

6. Einzelradaufhängungs - Baugruppe mit einem Fahrschemel (1) nach wenigstens einem der vorangegangenen Ansprüche.

7. Baugruppe nach Anspruch 6, **dadurch gekennzeichnet, dass** an den Aufnahmeelementen obere (31) und untere Querlenker (32) angeordnet sind.

8. Baugruppe nach Anspruch 6 oder 7, **dadurch gekennzeichnet, dass** ein Lenkgetriebe (35) vorgesehen ist, welches mit einer Befestigungseinrichtung (34) an dem Fahrschemel (1) angeordnet ist.

9. Baugruppe nach einem der Ansprüche 6 bis 8, **dadurch gekennzeichnet, dass** eine Domstrebe (26) vorgesehen ist, welche die beiden Halteelemente (3, 4) miteinander verbindet.

10. Nutzfahrzeug mit einem Fahrschemel nach wenigstens einem der vorangegangenen Ansprüche 1 bis 5.

11. Nutzfahrzeug mit einer Baugruppe nach wenigstens einem der vorangegangenen Ansprüche 6 bis 9.

## Claims

1. Suspension sub-frame (1) with single wheel suspensions for commercial vehicles with a first lateral holding element (3) and a second lateral holding element (4), which holding element (4) is arranged at a distance from the first lateral holding element (3), and with at least two cross members (7, 8), which cross members connect the two lateral holding elements (3, 4), whereby a retaining arrangement (11) for the accommodation of a suspension device (15) and/or a damping device (18) and retaining elements (21) for the accommodation of cross members (31) are arranged on each of the holding elements (3, 4), and a retaining device (9, 10) for the accommodation of a frame side member (30) is provided on each lateral holding element (3, 4), and whereby each retaining device (9, 10) for the accommodation of a frame side member (30) features a fixing rail (24) connectable to the frame side members (30), **characterised in that** the fixing rails (24) are supported by brackets (14) in relation to the cross members (7, 8).

2. Suspension sub-frame according to claim 1, **characterised in that** the lateral holding elements (3, 4) are designed as moulded parts or as a welded assembly.

3. Suspension sub-frame according to claim 1 or 2, **characterised in that** the fixing rails (24) are arranged between the lateral holding elements (3, 4).

4. Suspension sub-frame according to one of claims 1 to 3, **characterised in that** the fixing rails (24) are essentially provided along the entire length of the holding elements (3, 4).

5. Suspension sub-frame according to one of the previous claims, **characterised in that** the retaining arrangements (11) feature fixing means for the fixing of a strut brace (26) connecting the two holding elements (3, 4).

6. Independent wheel suspension assembly with a suspension sub-frame (1) according to at least one of the previous claims.

7. Assembly according to claim 6, **characterised in that** upper (31) and lower (32) cross members are arranged on the retaining elements.

8. Assembly according to claim 6 or 7, **characterised in that** a steering gear (35) is provided, which steering gear (35) is arranged with a fixing device (34) on the suspension sub-frame (1).

9. Assembly according to one of claims 6 to 8, **characterised in that** a strut brace (26) is provided, which strut brace (26) connects the two holding elements (3, 4) to each other.

10. Commercial vehicle with a suspension sub-frame according to at least one of the previous claims 1 to 5.

11. Commercial vehicle with an assembly according to at least one of the previous claims 6 to 9.

## Revendications

1. Faux-châssis (1) avec suspensions à roues indépendantes pour véhicules industriels avec un premier élément de support latéral (3), un deuxième élément de support latéral (4) disposé de manière distante par rapport au premier élément de support latéral (3) et au moins deux traverses (7, 8) reliant les deux éléments de support latéraux (3, 4), auquel cas un agencement de logement (11) destiné à accueillir un dispositif de suspension (15) et/ou un dispositif d'amortissement (18) et des éléments de logement (21) destinés à accueillir des bras transversaux (31) sont disposés sur chaque élément de support (3, 4) et auquel cas chaque dispositif de logement (9, 10) destiné à accueillir un longeron de cadre (30) est prévu sur chaque élément de support latéral (3, 4) et auquel cas chaque dispositif de logement (9, 10) destiné à accueillir un longeron de cadre (30) présente un rail de fixation (24) pouvant être relié aux longerons de cadre (30), **caractérisé en ce que** les rails de fixation (24) sont en appui sur les traverses (7, 8) au moyen d'appuis (14).

2. Faux-châssis selon la revendication 1, **caractérisé en ce que** les éléments de support latéraux (3, 4) sont réalisés sous forme de pièces embouties ou d'ensemble soudé.

3. Faux-châssis selon la revendication 1 ou 2, **caractérisé en ce que** les rails de fixation (24) sont disposés entre les éléments de support latéraux (3, 4).

4. Faux-châssis selon l'une des revendications 1 à 3, **caractérisé en ce que** les rails de fixation (24) sont prévus pour l'essentiel le long de toute la longueur des éléments de support (3, 4).

5. Faux-châssis selon l'une des revendications mentionnées précédemment, **caractérisé en ce que** les agencements de logement (11) présentent des moyens de fixation destinés à la fixation d'une entretoise voûtée (26) reliant les deux éléments de support (3, 4).

6. Ensemble de suspension à roues indépendantes avec un faux-châssis (1) selon au moins l'une des revendications mentionnées précédemment.

7. Ensemble selon la revendication 6, **caractérisé en ce que** des bras transversaux supérieurs (31) et inférieurs (32) sont disposés sur les éléments de logement.

8. Ensemble selon la revendication 6 ou 7, **caractérisé en ce qu'**un boîtier de direction (35) est prévu et est disposé sur le faux-châssis (1) au moyen d'un dispositif de fixation (34).

9. Ensemble selon l'une des revendications 6 à 8, **caractérisé en ce qu'**une entretoise voûtée (26) est prévue et relie les deux éléments de support (3, 4) entre eux.

10. Véhicule industriel avec un faux-châssis selon au moins l'une des revendications 1 à 5 mentionnées précédemment.

11. Véhicule industriel avec un ensemble selon au moins l'une des revendications 6 à 9 mentionnées précédemment.
